# NEUE EUROPÄISCHE PATENTSCHRIFT

(11) **EP 0 769 179 B2**
(45) Veröffentlichungstag und Bekanntmachung des Hinweises auf die Entscheidung über den Einspruch: **29.12.2004**
(45) Hinweis auf die Patenterteilung: 23.02.2000
(21) Anmeldenummer: 95922415.5
(22) Anmeldetag: 22.06.1995
(51) Int. Cl.: G06K 19/16

(54) **BEUGUNGSOPTISCH WIRKSAME STRUKTURANORDNUNG**
STRUCTURAL ASSEMBLY WITH DIFFRACTIVE PROPERTIES
STRUCTURE A EFFET DE DIFFRACTION OPTIQUE

(30) Priorität: 02.07.1994 DE 4423295
(43) Veröffentlichungstag der Anmeldung: 23.04.1997
(73) Patentinhaber: LEONHARD KURZ GMBH & CO., 90763 Fürth (DE); DEUTSCHE BUNDESBANK, 60431 Frankfurt am Main (DE)
(72) Erfinder: REINHART, Werner, D-90429 Nürnberg (DE); HERRMANN, Jürgen, D-64665 Alsbach (DE)
(74) Vertreter: LOUIS- PÖHLAU- LOHRENTZ
(86) Internationale Anmeldenummer: PCT/DE1995/000828
(87) Internationale Veröffentlichungsnummer: WO 1996/001458

(56) Entgegenhaltungen:
- EP-A- 0 240 262
- EP-A- 0 360 969
- EP-A- 0 366 858
- WO-A-91/03747
- WO-A-95/04948

## Beschreibung

Die Erfindung betrifft eine, auf einer Transferfolie zum Aufbringen auf einen zu sichernde Gegenstand angeordnete Strukturanordnung, bestehend aus mehreren eine beugungsoptisch wirksame Reliefstruktur aufweisenden Teilbereichen, insbesondere für visuell identifizierbare, optische Sicherheitselemente für Wertdokumente, z.B. Banknoten, Kreditkarten, Ausweise oder Scheckdokumente, oder sonstige zu sichernde Gegenstände, wobei eine überwiegende Anzahl der Teilbereiche streifen- oder bandförmig ausgebildet sind und eine Quererstreckung aufweisen, die mit bloßem Auge nicht mehr auflösbar ist und unter 0,3 mm liegt.

Eine derartige Strukturanordnung ist im einfachsten Fall durch eine geradlinige, auf der Oberfläche eines Trägerelementes vorgesehene Wellenstruktur realisiert, an der einfallendes Umgebungslicht unter Beugung und/oder Brechung reflektiert wird. In der Form des reflektierten Lichtes kann einem Betrachter eine den beugungsoptisch wirksamen Refliefstrukturen der Teilbereiche entsprechende und u.a. vom Betrachtungswinkel abhängige, visuell wahrnehmbare Information vermittelt werden.

Die Beugung einfallenden Umgebungslichtes an den Reliefstrukturen der Teilbereiche und damit die von dort ausgesandte Information in Form eines optischen Beugungsbildes werden bestimmt durch die Anzahl der Wellen- oder Gitterlinien pro Längeneinheit eines Teilbereiches, die sogenannte Spatialfrequenz, sowie durch die Querschnittsform der Reliefstruktur, die u.a. durch die Höhenunterschiede in der Reliefstruktur definiert ist, und zwar sowohl durch die Höhenunterschiede zwischen den einzelnen Erhebungen untereinander als auch zwischen Erhebungen und Tälern der Reliefstruktur. Die Reliefstrukturen der Teilbereiche können so ausgebildet und die Teilbereiche so angeordnet werden, dass eine bestimmte Information in einen bestimmten Betrachtungswinkelbereich ausgesandt und von einem Betrachter wahrgenommen werden kann, wohingegen in einem anderen Betrachtungswinkelbereich keine oder eine andere Information wahrgenommen werden kann.

Durch die Verwendung von an sich bekannten Sicherheitselementen mit einer beugungsoptisch wirksamen Strukturanordnung bei den eingangs erwähnten zu sichernden Gegenständen ist es möglich, auch dem ungeübten Laien Echtheitsinformationen des gesicherten Gegenstandes sichtbar zu machen und gleichzeitig eine Fälschung, z.B. in Form einer Vervielfältigung, unter Berücksichtigung bekannter Fälschungsverfahren, insbesondere optischer Vervielfältigungsverfahren, unmöglich zu machen oder hinreichend zu erschweren.

Es wird angestrebt, eine Strukturanordnung so auszubilden, dass eine von ihr ausgehende visuell wahrnehmbare Information ästhetischen Gesichtspunkten genügt, so dass bei einem Betrachter z.B. ein besonders brillanter oder sehr homogener, gleichmässiger Bildeindruck entsteht, der insbesondere ein eine Information vermittelndes Zeichen oder Symbol umfassen kann. Es kann aber auch angestrebt werden bei einem Betrachter den Eindruck einer besonders brillanten Farbdarsteilung oder den Eindruck sehr homogener, gleichmässiger Farbgebung (auch innerhalb größerer Flächenbereiche) zu wecken. Häufig ist es auch erwünscht, einen Informationswechsel wie er beispielsweise durch Verändern des Betrachtungswinkels, z.B. durch Verschwenken des die Strukturanordnung tragenden Trägerelementes um eine in der Ebene des Trägerelementes liegende Achse oder durch Drehen um eine senkrecht zu dieser Ebene gedachte Achse, hervorgerufen werden kann, möglichst scharf und exakt herbeizuführen. Dies wurde in der Vergangenheit durch Strukturanordnungen mit Teilbereichen als kleinster Trägereinheit einer bestimmten optischen Information, sog. Pixel, zu erreichen gesucht, deren Abmessung grössenordnungsmäss 60 x 60 µm betrug, die also mit dem blossen Auge nicht mehr auflösbar sind. Es war also möglich, an einem bestimmten makroskopisch wahrnehmbaren Ortsbereich mehrere, voneinander verschiedene optische Informationen vermittelnde Teilbereiche vorzusehen, die in Abhängigkeit der erwähnten Betrachtungsparameter gleichzeitig oder einzeln "aktiviert" sind. Um den Eindruck einer homogenen, gleichmässigen Bildwahrnehmung noch zu verstärken, ist bereits vorgeschlagen worden, die Grösse der Teilbereiche weiter zu reduzieren. Durch die damit erforderliche grössere Anzahl von entsprechend kleineren Teilbereichen bringt diese Vorgehensweise jedoch den Nachteil mit sich, dass der Einfluss der Ränder der Teilbereiche auf das entstehende Beugungsbild zunimmt, indem unerwünschte, durch den Übergang von einer Reliefstruktur innerhalb eines Teilbereiches zu einer weiteren Reliefstruktur in angrenzenden Teilbereichen hervorgerufene zusätzliche Beugungserscheinungen entstehen. Ausserdem wird durch die genannte Massnahme die effektive Flächenausnutzung in der Strukturanordnung verringert, da die Anzahl und damit die gesamte Fläche der Beriche, die zu einer Informationsvermittlung nicht beitragen, drastisch erhöht wird, z.B. die Eckbereiche eines quadratischen Teilbereiches mit insbesondere bogenförmig gekrümmten Relieflinien, deren Länge sich zu den Ecken hin verkürzt.

Eine gattungsgemäße Strukturanordnung ist aus der EP-A-0 360 969 bekannt. Bei dieser bekannten Strukturanordnung sind die einzelnen Teilflächen in ihrer überwiegenden Anzahl zwar nicht quadratisch sondern rechteckig. Die Abmessungsunterschiede in Längs- bzw. Querrichtung sind jedoch nur vergleichsweise gering, was zur Folge hat, dass auch die bekannte Strukturanordnung aus einer Vielzahl von Teilflächen zusammengesetzt ist, d.h. entsprechend viele, möglicherweise die Darstellung störende Eckbereiche und einzelne Teilbereiche vorhanden sind.

In der EP-A-0 366 858 ist ein Strichkodefeld mit Strichelementen und Hintergrundelementen beschrieben, wobei in die Strichelemente einerseits sowie Hintergrundelemente andererseits Reliefstrukturen eingeprägt sind. Die Reliefstrukturen von Strich- und Hintergrundelementen unterscheiden sich durch wenigstens einen Parameter, so dass Strichelemente einerseits sowie Hintergrundelemente andererseits jeweils Teilflächen- Gruppen bilden, wobei die einzelnen Teilflächen entsprechend der üblichen Ausbildung von Strichkodes Striche unterschiedlicher Breite darstellen. Nachdem der Strichkode gemäß EP-A-0 366 858 mit dem bloßem Auge erkennbar sein soll, ist davon auszugehen, dass auf jeden Fall die Breite der Strich- bzw. Hintergrundelemente so groß ist, dass sie mit dem bloßem Auge auflösbar ist, somit deutlich über 0,3 mm liegt. Im übrigen sind in der EP-A-0 366 858 keine Angaben über die genauen Abmessungen der Strichund Hintergrundelemente enthalten.

Der Erfindung liegt die Aufgabe zugrunde, eine Strukturanordnung der eingangs genannten Art dahingehend zu verbessern, dass sie hinsichtlich der Brillanz und der Homogenität der vermittelten Bildeindrücke sowie hinsichtlich der Exaktheit von mittels der Strukturanordnung erreichbaren Wechseln zwischen verschiedenen Bildeindrücken herkömmlichen Strukturanordnungen überlegen ist, jedoch auf einfache und wirtschaftliche Weise herstellbar ist.

Diese Aufgabe wird durch eine Strukturanordnung gemäß Anspruch 1 gelöst.

Unter streifen- oder bandförmiger Ausbildung wird verstanden, dass die Längserstreckung der Teilbereiche ein Vielfaches ihrer Quererstreckung beträgt. Mit einer solchen Strukturanordnung können somit die Anzahl sowie die gesamte Fläche der zu der optischen Informationsvermittlung nicht beitragenden Bereiche innerhalb der Strukturanordnung verringert werden. Weiter wird erfindungsgemäss erreicht, dass der unerwünschte Einfluss der Übergangsbereiche zwischen Reliefstrukturen aneinander angrenzender Teilbereiche auf das erwünschte, eine bestimmte Information vermittelnde Beugungsbild durch drastische Verkürzung der Randlänge der Teilbereiche reduziert wird. Dadurch daß die streifen- oder bandförmigen Teilbereiche mit einer Quererstreckung ausgebildet sind, die mit blossem Auge nicht mehr auflösbar ist und unterhalb von 0,3 mm liegt, entsteht bei einem Betrachter auch der Eindruck eines gleichmässigen homogenen Farbempfindens. Vorzugsweise wird die Quererstreckung noch sehr viel kleiner gewählt, beträgt jedoch mehr als 3 µm, vorzugsweise mehr als 5 µm. Weiter hat es sich als besonders vorteilhaft erwiesen, dass die Längserstrekkung der Teilbereiche mehr als 0,3 mm beträgt; vorzugsweise werden zur Ausbildung der erfindungsgemässen Strukturanordnung Teilbereiche mit Längserstreckung von mehr als 0,4 mm, insbesondere von mehr als 0,5 mm gewählt.

Es wird weiter vorgeschlagen, die streifen- oder bandförmigen Teilbereiche so auszubilden, dass ihre Längserstreckung zumindest das Zehnfache ihrer Quererstreckung beträgt.

Es versteht sich, dass eine erfindungsgemässe Strukturanordnung zumindest bereichsweise aus Teilbereichen einer einzigen beugungsoptisch wirksamen Reliefstruktur gebildet sein kann. Erfindungsgemässe Strukturanordnungen, die eine erste Gruppe von Teilbereichen mit einer ersten beugungsoptisch wirksamen Struktur und wenigstens eine weitere Gruppe von Teilbereichen mit einer von der ersten Struktur abweichenden beugungsoptisch wirksamen Struktur aufweisen, erweisen sich z.B. dann als besonders vorteilhaft, wenn es erwünscht ist, in einem insbesondere begrenzten, von einem Betrachter wahrnehmbaren Flächenbereich der Strukturanordnung mehrere optische Informationen zu "speichern", die dem Betrachter in Abhängigkeit der eingangs erwähnten Parameter (Lichteinfall, Betrachtungswinkel) verschiedene, von dem erfassten Flächenbereich ausgehende optische Eindrücke vermitteln sollen. Insbesondere für den Fall, dass ein scharfer, exakter Informationswechel, z.B. ein Farbwechsel oder ein Wechsel von einem Symbol zu einem anderen, erwünscht ist, wenn etwa das Trägerelement der Strukturanordnung um eine in dessen Ebene liegende Achse geschwenkt wird, wird eine Strukturanordnung vorgeschlagen, bei der die streifen- oder bandförmigen Teilbereiche im wesentlichen im gleichen Abstand zueinander, insbesondere parallel verlaufend angeordnet sind. Im Sinne einer effektiven Flächenausnutzung empfiehlt es sich weiter, die Streifen oder Bänder so zu bemessen, dass ihre Längserstreckung durch die Erstreckung der Strukturanordnung oder auch eines Teiles derselben in der betreffenden Richtung bestimmt ist.

Eine Weiterbildung der Erfindung von ganz erheblicher Bedeutung wird in der Lösung des Problems gesehen, eine bestimmte einzelne Information in brillanter und gleichmässiger Weise über einen sehr grossen Betrachtungswinkel zu übermitteln. Mit ein und derselben beugungsoptisch wirksamen Reliefstruktur konnte dies in der Vergangenheit nur in unbefriedigender Weise bewerkstelligt werden. Eine erfindungsgemässe Strukturanordnung, die hier wirksam Abhilfe schafft, weist, wie vorstehend erwähnt, Gruppen von Teilbereichen mit entsprechend der Gruppenzugehörigkeit unterschiedlicher beugungsoptisch wirksamer Struktur auf, wobei die Struktur von vorzugsweise auf demselben Flächenbereich der Strukturanordnung lokalisierten Teilbereichen der ersten bzw. wenigstens einer weiteren Gruppe so ausgebildet ist, dass bei Beleuchtung der Strukturanordnung von den Teilbereichen unterschiedlicher Gruppenzugehörigkeit ausgehende, visuell wahrnehmbare Informationen von verschiedenen Teilwinkelbereichen dieses Betrachtungwinkelbereiches aus gesehen identisch sind. D.h., für die Übermittlung einer bestimmten einzelnen Information in einem Betrachtungswinkelbereich ist für die verschiedenen Teilwinkelbereiche dieses Betrachtungswinkelbereiches jeweils eine Gruppe von Teilbereichen verantwortlich.

Mit einer solchen Strukturanordnung ist es beispielsweise möglich, einen grossen Betrachtungswinkelbereich in mehrere kleinere Teilwinkelbereiche zu zerlegen und jedem Teilwinkelbereich streifen- oder bandförmige Teilbereiche einer bestimmten Gruppe zuzuordnen, in denen die gewünschte einzelne Information für diesen Teilwinkelbereich "gespeichert" ist und in Form eines Beugungsbildes in diesen Teilwinkelbereich ausgesandt wird, wenn die Strukturanordnung beleuchtet wird. Durch entsprechende Ausbildung der Struktur der Teilbereiche unterschiedlicher Gruppenzugehörigkeit sowie durch geeignete Anordnungen der Teilbereiche kann erfindungsgemäss erreicht werden, dass die erwähnten Teilwinkelbereiche aneinander angrenzen und so in einem durch die Teilwinkelbereiche gebildeten grösseren Betrachtungswinkelbereich dieselbe optische Information, jedoch von Teilbereichen unterschiedlicher Gruppenzugehörigkeit, wahrnehmbar ist. Es empfiehlt sich, die streifen- oder bandförmigen Teilbereiche unterschiedlicher Gruppenzugehörigkeit alternierend, also A1/A2/A1/A2, oder entsprechend einer Sequenz A1/A1/A2/A1/A1/A2 oder A1/A2/A3/A1/A2/A3 anzuordnen.

Es wird weiter vorgeschlagen, auf einem insbesondere begrenzten Flächenbereich der Strukturanordnung sowohl Gruppen von Teilbereichen A1, A2, etc. zur Übermittlung einer bestimmten Information A in Teilwinkelbereiche α1, α2, etc. eines Betrachungswinkelbereiches α als auch Gruppen von Teilbereichen B1, B2, etc. zur Übermittlung einer bestimmten anderen Information B in Teilbereiche β1, β2, etc. eines anderen Betrachtungswinkelbereiches β vorzusehen. Wenn die Betrachungswinkelbereiche aneinander angrenzen, so wechselt bei einem Betrachter der Bildeindruck, wenn er seine Betrachtungsrichtung vom Betrachtungswinkelbereich α in den Betrachtungswinkelbereich β verändert.

Der Erfindung liegt weiter die Aufgabe zugrunde, eine Transferfolie, insbesondere eine Heissprägefolie, sowie ein eingangs erwähntes optisches Sicherheitselement für Wertdokumente oder sonstige zu sichernde Gegenstände bereitzustellen, bei denen die im Zusammenhang mit bekannten Strukturanordnungen bestehenden Probleme und Nachteile nicht auftreten. Diese Aufgabe wird durch die Verwendung einer Transferfolie, mit einer wie vorstehend beschrieben ausgebildeten erfindungsgemässen Strukturanordnung als visuell identifizierbares optisches Sicherheitselement gelöst. Weiter wird zum Gegenstand der Erfindung ein Wertdokumententräger gerechnet, der anstelle eines Sicherheitselementes mit einer beugungsoptisch wirksamen Strukturanordnung einen Sicherheitsbereich aufweist, auf den eine erfindungsgemässe Strukturanordnung durch ein geeignetes Transferverfahren, insbesondere durch einen Heissprägevorgang, aufgebracht wurde.

Weitere Merkmale, Einzelheiten und Vorteile der Erfindung ergeben sich aus den beigefügten Zeichnungen sowie aus der nachfolgenden Beschreibung besonders vorteilhafter Ausführungsformen der erfindungsgemässen Strukturanordnung.

Es zeigen -:
- Figur 1: eine schematische Darstellung eines zu sichernden Gegenstandes mit einem Sicherheitselement;
- Figur 2: einen Ausschnitt einer Strukturanordnung des Standes der Technik;
- Figur 3: einen Teilbereich einer erfindungsgemässen Strukturanordnung;
- Figur 4: eine schematische Darstellung einer weiteren Strukturanordnung;
- Figur 5: eine schematische Darstellung der optischen Information des Beugungsbildes bei einer Strukturanordnung nach Figur 5a bzw. 5b;
- Fig.5a und 5b: eine Strukturanordnung mit zeilenweise angeordneten Teilbereichen;
- Figur 6: eine Transferfolie mit einer erfindungsgemässen Strukturanordnung und
- Figur 7: einen Wertdokumententräger mit einer eingeprägten beugungsoptisch wirksamen Strukturanordnung.

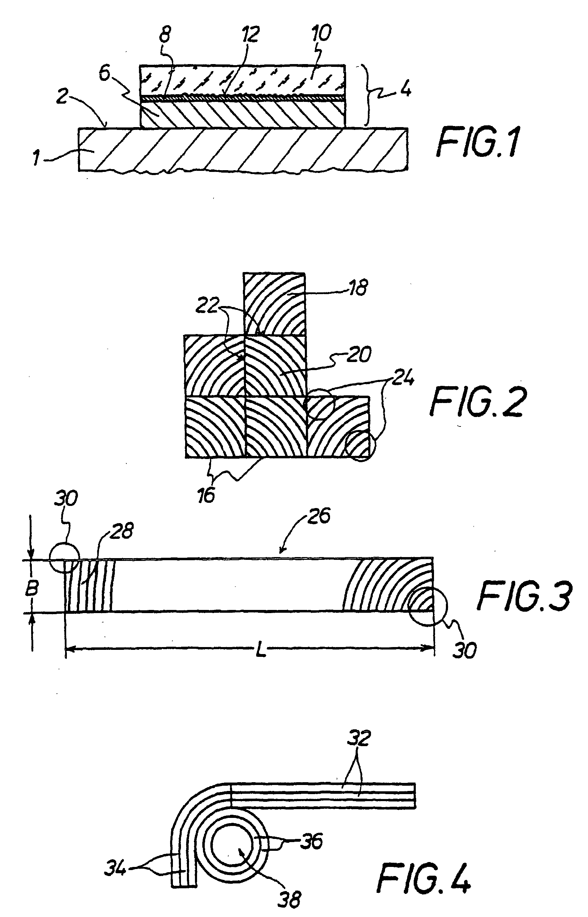

Figur 1 zeigt einen zu sichernden Gegenstand 1, beispielsweise eine aus Kunststoff bestehende Scheckkarte oder dergleichen. Auf einer Oberfläche 2 des zu sichernden Gegenstandes 1 ist ein zusammenfassend mit der Bezugsziffer 4 bezeichnetes Sicherheitselement abgebildet. Das Sicherheitselement 4 umfasst einen Substratbereich 6, eine dünne metallische Schicht 8 sowie eine transparente Deckschicht 10. Die Deckschicht 10 weist auf ihrer dem zu schützenden Gegenstand 1 zugewandten Seite eine aus Wellen-oder Gitterlinien bestehene reliefartige Oberflächenstruktur 12 auf - im folgenden als Strukturanordnung bezeichnet -, auf welche die metallische Schicht 8 aufgebracht, insbesondere aufgedampft wurde.

Figur 2 zeigt in schematischer Darstellung eine Draufsicht auf eine dem Stand der Technik angehörende Strukturanordnung mit Teilbereichen 16, die eine einer bestimmten Information entsprechende beugungsoptisch wirksame Reliefstruktur 18 bzw. 20 aufweisen. Mit der Bezugsziffer 22 sind die Ränder der Teilbereiche 16, d.h. die Übergangsbereiche einer beugungsoptisch wirksamen Reliefstruktur zu einer weiteren Reliefstruktur, bezeichnet. Diese Ränder 22 verursachen unerwünschte zusätzliche Beugungserscheinungen, welche die von den Reliefstrukturen 18, 20 zu übermittelnden optisch wahrnehmbaren Informationen verfälschen. Durch die mit dem Bezugszeichen 24 bezeichneten Kreise werden die Bereiche veranschaulicht, welche zur Erzeugung des erwünschten Beugungsbildes nicht oder zumindest weniger wirksam beitragen.

Figur 3 zeigt dagegen einen Teilbereich 26 einer erfindungsgemässen Strukturanordnung. Wie aus der Figur 3 ersichtlich ist, ist der Teilbereich 26 streitenoder bandförmig ausgebildet, d.h. seine Längserstrekkung L beträgt ein Vielfaches seiner Quererstreckung B. Weiter ist Weiter ist eine über den Teilbereich 26 homogene Reliefstruktur 28 schematisch angedeutet. Bei dieser erfindungsgemässen Strukturanordnung gibt es lediglich zwei Zonen 30, die einen im Vergleich zu der übrigen Fläche des Teilbereiches 26 geringeren Beitrag zu dem bei Beleuchtung entstehenden Beugungsbild leisten.

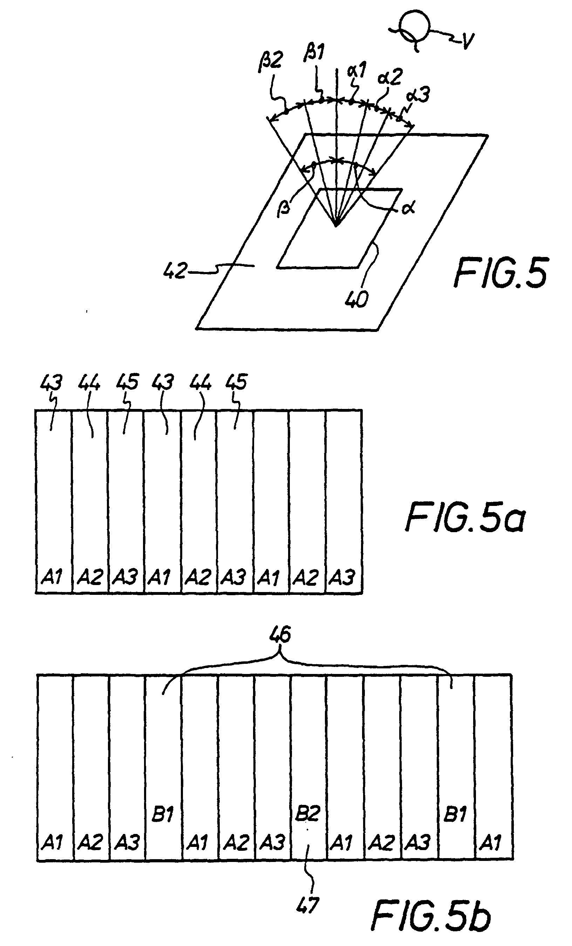

In der Figur 4 ist ein grösserer Bereich einer erfindungsgemässen Strukturanordnung dargestellt, in welchem streifen- oder bandförmige Bereiche 32 zeilenförmig und gerade verlaufend angeordnet sind, wohingegen andere streifenförmige Teilbereiche 34 bogenförmig gekrümmt ausgebildet und angeordnet sind. Weitere Teilbereiche 36 haben die Form konzentrischer Ringe, was sich insbesondere dann anbietet, wenn ein rotationssymmetrisches Beugungsbild erzeugt werden soll, d.h. wenn einem Betrachter unabhängig von der Orientierung der Strukturanordnung bei Drehung um eine erdachte, senkrecht zur Zeichenebene durch den Punkt 38 verlaufende Achse dieselbe Information vermittelt werden soll.

Figur 5 zeigt in schematischer Weise eine in Form eines Beugungsbildes vermittelte optische Informationsverteilung innerhalb eines Betrachtungswinkelbereiches α. Eine solche Informationsverteilung ist insbesondere mit einer Strukturanordnung wie sie in Figur 5a gezeigt ist, zu erhalten. Dabei ist Figur 5a eine vergrösserte schematische Darstellung eines Ausschnittes eines von einem Betrachter V erfassten Flächenbereiches 40 einer Strukturanordnung 42 der Figur 5.

Um einen möglichst homogenen gleichmässigen Eindruck einer bestimmten Information, z.B. den Farbeindruck rot, über den gesamten Betrachtungswinkelbereich α zu erreichen, wurde dieser Bereich in drei Teilwinkelbereiche α1, α2 und α3 zerlegt, die in Beziehung zu Teilbereichen 43 bzw. 44 bzw. 45 des Flächenbereiches 40 der Strukturanordnung 42 stehen. Die Teilbereiche 43, 44, 45 weisen Reliefstrukturen A1, A2 bzw. A3 auf, die so ausgebildet sind, dass einem Betrachter V über den gesamten Betrachtungswinkelbereich α die identische, jedoch innerhalb der Teilwinkelber eiche von einer jeweils anderen Gruppe von Teilbereichen 43, 44 bzw. 45 stammende Information vermittelt werden kann. Die Teilbereiche 43, 44, 45 sind hierfür zeilenweise und in der Sequenz A1/A2/A3 angeordnet

Werden in dem Flächenbereich 40, wie in Figur 5b dargestellt, zusätzliche Gruppen von Teilbereichen 46, 47 mit eine andere Information, z.B. eine Zeichendarstellung, vermittelnden Strukturen B1, B2 vorgesehen, so kann durch geeignete Ausbildung und Orientierung der Teilbereiche in einem (in Figur 5 gestrichelt angedeuteten) Betrachungswinkelbereich β bzw. in Teilwinkelbereichen β1 und β2 diese Information - Zeichendarstellung - wahrgenommen werden.

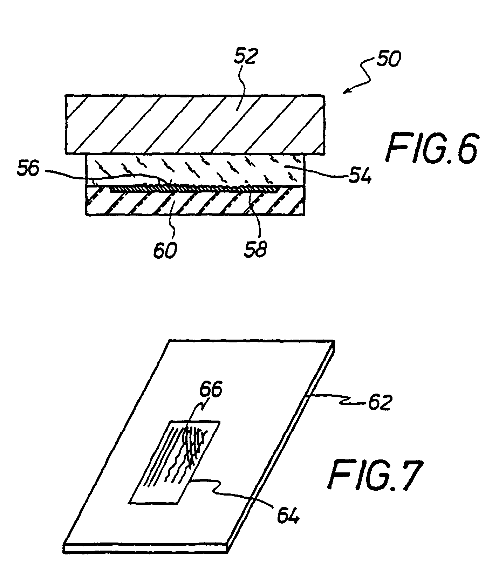

Figur 6 zeigt einen einfachen, prinzipiellen Aufbau einer erfindungsgemässen Transferfolie 50 mit einer oberen, nach dem Aufbringen der Strukturanordnung auf einen zu sichernden Gegenstand zu entfernenden Trägerfolie 52. An die dem zu sichernden Gegenstand zugewandte Seite der Trägerfolie schliessen sich eine transparente Schicht 54 mit einer erfindungsgemässen Strukturanordnung 56 an, welchletztere mit einer dünnen metallischen Schicht bedampft ist. Schliesslich weist die Transferfolie eine Kleberschicht 60 auf, mittels derer die Verbindung zu einem zu sichernden Gegenstand hergestellt werden kann.

Figur 7 zeigt einen Wertdokumententräger, insbesondere einen Bereich einer Flachmaterialbahn 62 aus einem Kunststoffmaterial, der anstelle eines auf seine Oberfläche aufgebrachten Sicherheitselementes einen Sicherheitsbereich 64 aufweist, mit einer durch eine Prägung aufgebrachten erfindungsgemässen Strukturanordnung 66.

## Patentansprüche

1. Auf einer Transferfolie (50) zum Aufbringen auf einen zu sichernde Gegenstand (62) angeordnete Strukturanordnung, bestehend aus mehreren eine beugungsoptisch wirksame Reliefstruktur aufweisenden Teilbereichen (26, 32, 34, 43, 44, 45, 46, 47), insbesondere für visuell identifizierbare, optische Sicherheitselemente für Wertdokumente, z.B. Banknoten, Kreditkarten, Ausweise oder Scheckdokumente, oder sonstige zu sichernde Gegenstände, wobei eine überwiegende Anzahl der Teilbereiche (26, 32, 34, 43, 44, 45, 46, 47) streifenoder bandförmig ausgebildet sind und eine Quererstreckung aufweisen, die mit bloßem Auge nicht mehr auflösbar ist und unterhalb von 0,3 mm liegt,
und wobei
die Längserstreckung der streifen- oder bandförmigen Teilbereiche (26, 32, 34, 43, 44, 45, 46, 47) zumindest das Zehnfache ihrer Quererstrekkung und mehr als 0,3 mm beträgt.

2. Strukturanordnung nach Anspruch 1,
**dadurch gekennzeichnet,**
**dass** die streifen- oder bandförmigen Teilbereiche (26, 32, 43, 44, 45, 46, 47) im wesentlichen geradlinig und zueinander parallel verlaufend angeordnet sind, und dass ihre Längserstreckung durch die Erstreckung der Strukturancrdnung oder eines Teiles (40) derselben in der betreffenden Richtung bestimmt ist.

3. Strukturanordnung nach Anspruch 1 oder 2,
**dadurch gekennzeichnet,**
**dass** sie eine erste Gruppe von Teilbereichen (43) mit einer ersten beugungsoptisch wirksamen Struktur (A1) und wenigstens eine weitere Gruppe von Teilbereichen (44, 45, 46, 47) mit einer von der ersten Struktur abweichenden beugungsoptisch wirksamen Struktur (A2, A3, B1, B2) aufweist

4. Strukturanordnung nach Anspruch 3,
**dadurch gekennzeichnet,**
**dass** die Struktur der Teilbereiche der ersten (43) bzw. der wenigstens einen weiteren Gruppe (44, 45) so ausgebildet ist, dass bei Beleuchtung der Strukturanordnung von den Teilbereichen unterschiedlicher Gruppen ausgehende, visuell wahrnehmbare Informationen von verschiedenen Teilwinkelbereichen (α1, α2, α3) eines Betrachungswinkelbereiches (α) aus gesehen identisch sind.

5. Stukturanordnung nach Anspruch 4,
**dadurch gekennzeichnet,**
**dass** die Strukturen der Teilbereiche (43, 33, 45) derart ausgebildet sowie die Teilbereiche derart angeordnet sind, dass die verschiedenen Teilwinkelbereiche (α1, α2, α3) aneinander angrenzen.

6. Strukturanordnung nach einem der Ansprüche 3 bis 5,
**dadurch gekennzeichnet,**
**dass** die Teilbereiche der ersten (43) und der wenigstens einen weiteren Gruppe (44, 45) alternierend oder sequentiell angeordnet sind.

7. Verwendung einer Transferfolie mit einer Strukturanordnung nach einem der Ansprüche 1 bis 6 als visuell identifizierbares optisches Sicherheitselement für Wertdokumente, insbesondere für Banknoten, Kreditkarten, Ausweise oder Scheckdokumente.

8. Verwendung nach Anspruch 7 als Sicherheitsbereich (64) für Wertdokumentträger, insbesondere aus Papier oder Kunststoff.

## Claims

1. Structural arrangement, being arranged on a transfer film (50) for applying it to an object to be safeguarded and comprising a plurality of subregions (26, 32, 34, 43, 44, 45, 46, 47) having a relief structure which is active in terms of optical diffraction, in particular for visually identifiable, optical security elements for valuable documents, for example banknotes, credit cards, identity cards or cheque documents, or other objects to be safeguarded, a preponderant number of the subregions (26, 32, 34, 43, 44, 45,46, 47) being of strip-shaped or band-shaped construction and having a transverse extent which can no longer be resolved with the naked eye and is below 0.3 mm, and the longitudinal extent of the strip-shaped or band-shaped subregions (26, 32, 34, 43, 44, 45, 46, 47) being at least ten times their transverse extent and more than 0.3 mm.

2. Structural arrangement according to Claim 1, **characterized in that** the strip-shaped or band-shaped subregions (26, 32, 43, 44, 45, 46, 47) are arranged essentially in a straight line and running parallel to one another, and **in that** their longitudinal extent is determined by the extent of the structural arrangement or of a part (40) thereof in the relevant direction.

3. Structural arrangement according to Claim 1 or 2, **characterized in that** it has a first group of subregions (43) with a first structure (A1) which is active in terms of optical diffraction, and at least one further group of subregions (44, 45, 46, 47) with a structure (A2, A3, B1, B2) which differs from the first structure and is active in terms of optical diffraction.

4. Structural arrangement according to Claim 3, **characterized in that** the structure of the subregions of the first (43) and of the at least one further group (44, 45) is constructed such that upon illumination of the structural arrangement, visually perceptible information emanating from the subregions of different groups is identical when seen from different angular subregions (α1, α2, α3) of an angular viewing region (α).

5. Structural arrangement according to Claim 4, **characterized in that** the structures of the subregions (43, 33, 45) are constructed in such a way that, and the subregions are arranged in such a way that the different angular subregions (α1, α2, α3) adjoin one another.

6. Structural arrangement according to one of Claims 3 to 5, **characterized in that** the subregions of the first (43) and of the at least one further group (44, 45) are arranged alternately or sequentially.

7. Use of a transfer film having a structural arrangement according to one of Claims 1 to 6 as a visually identifiable optical security element for valuable documents, in particular for banknotes, credit cards, identity cards or cheque documents.

8. Use according to Claim 7 as a security region (64) for valuable document media, in particular made from paper or plastic.

## Revendications

1. Structure disposée sur une feuille de transfert (50) destinée à être appliquée sur un objet a protéger, comprenant plusieurs zones partielles (26, 32, 34, 43, 44, 45, 46, 47) présentant une structure en relief à effet de diffraction optique, destinée en particulier à des éléments de protection optiques, visuellement identifiables, destinés à des documents de valeur, tels que des billets de banque, des cartes de crédit, des pièces d'identité ou des chèques, ou d'autres objets à protéger, dans laquelle un nombre important de zones partielles (26, 32, 34, 43, 44, 45, 46, 47) sont réalisées en forme de ruban ou de bande et présentent une dimension en largeur qui ne peut être distinguée à l'oeil nu et qui est inférieure à 0,3 mm, la dimension en longueur des zones partielles (26, 32, 34, 43, 44, 45, 46, 47) en forme de ruban ou de bande étant égale au moins à dix fois la dimension en largeur et supérieure à 0,3 mm.

2. Structure selon la revendication 1, **caractérisée en ce que** les zones partielles (26, 32, 43, 44, 45, 46, 47) en forme de ruban ou de bande sont disposées sensiblement en ligne droite et parallèles les unes aux autres et **en ce que** leur dimension en longueur est déterminée par la dimension de la structure ou d'une partie (40) de celle-ci dans la direction concernée.

3. Structure selon la revendication 1 ou 2, **caractérisée en ce qu'**elle comporte un premier groupe de zones partielles (43) munies d'une première structure (Al) à effet de diffraction optique et au moins un autre groupe de zones partielles (44, 45, 46, 47) munies d'une structure (A2, A3, Bl, B2) avec un effet de diffraction optique différente de la première structure.

4. Structure selon la revendication 3, **caractérisée en ce que** la structure des zones partielles du premier groupe (43) ou de l'autre groupe(44, 45), au nombre d'un au moins, est conçue de telle sorte que, lors de l'éclairage de la structure, des informations, qui émanent des zones partielles des différents groupes et qui peuvent être distinguées visuellement, sont identiques si elles sont observées selon différents angles partiels (α1, α2, α3) dans une zone angulaire d'observation (α).

5. Structure selon la revendication 4, **caractérisée en ce que** les structures des zones partielles (43, 33, 45) sont conçues et les zones partielles disposées de telle sorte que les différentes zones angulaires partielles (α1,α2, α3) sont juxtaposées les unes aux autres.

6. Structure selon l'une quelconque des revendications 3 à 5, **caractérisée en ce que** les zones partielles du premier groupe (43) et de l'autre groupe (44, 45), au nombre d'un au moins, sont disposées en alternance ou par séquence.

7. Utilisation d'une feuille de transfert comprenant une structure selon l'une quelconque des revendications 1 à 6, en tant qu'élément de protection optique, visuellement identifiable, destiné à des documents de valeur, en particulier des billets de banque, des cartes de crédit, des pièces d'identité ou des chèques.

8. Utilisation selon la revendication 7, en tant que zone de protection (64) destinée à des supports de documents de valeur, en particulier en papier ou matière plastique.
